# EUROPEAN PATENT APPLICATION

(11) **EP 0 567 252 A1**
(43) Date of publication of application: **27.10.1993**
(21) Application number: 93302753.4
(22) Date of filing: 07.04.1993
(51) Int. Cl.: C23C 28/00, C23C 8/14

(54) **Whisker-anchored thermal barrier coating**

(30) Priority: 17.04.1992 US 870071
(71) Applicant: GENERAL ELECTRIC COMPANY, Schenectady, NY 12345 (US)
(72) Inventor: Young, William Rollin, Cincinnati, Ohio 45241 (US)
(74) Representative: Pratt, Richard Wilson

(57) **Abstract**

A coated article comprises a superalloy substrate, a metallic bond coat on the substrate, and a ceramic thermal barrier coating on the bond coat. A plurality of whiskers extends through at least a portion of the bond coat between the substrate and the thermal barrier coating, anchoring the thermal barrier coating to the substrate with a pegging effect. The bond coat is preferably an iron, chromium, aluminum alloy, the thermal barrier coating is preferably yttria-stabilized zirconia, and the whiskers are preferably aluminum oxide whiskers formed at the surface of the bond coat by oxidation.

## Description

### BACKGROUND OF THE INVENTION

This invention relates to thermal barrier coating systems, and, more particularly, to such a system wherein the thermal barrier coating is pegged to the bond coat.

In an aircraft gas turbine ("jet") engine, air is drawn into the front of the engine, compressed, and mixed with fuel. The mixture is burned, and the hot combustion gas is passed through a turbine that drives the compressor and exhausts from the rear of the engine to produce thrust. The operating efficiency of the engine is determined in part by the maximum temperature of the combustion gas. This maximum temperature is usually limited by the materials that are used to manufacture critical components of the engine, such as the turbine blades and turbine vanes. In current gas turbine engines, these critical components are made of nickel-based superalloys that have nominal maximum use temperatures of about 1030°-1150°C, depending upon the alloy.

Thermal barrier coating systems are sometimes applied to the critical superalloy components to insulate them (and also protect them from oxidation, corrosion, and erosion). The insulation permits the components to be used in higher combustion gas temperatures than otherwise possible. There is a temperature drop across the insulation from its outer surface to its inner surface. Thus, if the component has a nominal maximum operating temperature established by the properties of the metal alloy, the insulation on the surface of the component permits the hot gas temperature to be greater than the nominal maximum operating temperature of the metal alloy.

In a typical thermal barrier coating system for a nickel-based superalloy, a ceramic thermal barrier coating such as zirconia-8 percent yttria is applied as a thin insulation layer about 0.005 inch thick over the surface of the superalloy substrate. The ceramic is subject to cracking and spalling during thermal cycling due to the differential in thermal expansion between the ceramic and the superalloy, and it is therefore common practice to provide an aluminum-containing superalloy bond coat about 0.001-0.003 inch thick between the superalloy substrate and the thermal barrier coating. The bond coat also provides resistance to oxidation and hot corrosion. The thermal barrier coating system is applied by first coating the substrate with the bond coat and then depositing the thermal barrier coating over the bond coat.

When the thermal barrier coating system fails, the protected component usually fails soon thereafter due to burning of the superalloy beneath the coating failure. Existing thermal barrier coating systems can resist thousands of engine cycles and remain in place to protect the substrate component. It is observed in practice that eventual failures of the thermal barrier coating system occur locally at the interfaces between the bond coat and the superalloy, or between the thermal barrier coating and the bond coat. These failures limit the operating lifetime of the thermal barrier coating system, which in turn can be a factor that limits the operating lifetime of the protected component, and thence the time between overhauls of the engine.

There is therefore an effort to extend the life of thermal barrier coating systems prior to failure, and a need for techniques to achieve such life extensions prior to failure of the thermal barrier coating systems. The present invention fulfills this need, and further provides related advantages.

### SUMMARY OF THE INVENTION

The present invention provides an improved thermal barrier coating system that is more resistant to failure than prior thermal barrier coating systems. The improvement is found in the internal structure of the thermal barrier coating system, which permits it to be applied in the same coating thicknesses that have been found optimal in particular situations but with improved failure resistance. The improvement is related to the structure of the bond coat region of the thermal barrier coating system, and it is possible to use conventional thermal barrier coating materials, such as yttria-stabilized zirconia, in the system.

In accordance with the invention, a coated article comprises a substrate, a bond coat on the substrate, a thermal barrier coating on the bond coat, and a plurality of whiskers extending through at least a portion of the bond coat between the substrate and the thermal barrier coating. Desirably, the whiskers extend through the entire thickness of the bond coat between the superalloy substrate and the thermal barrier coating.

The whiskers serve to anchor the ceramic thermal barrier coating to the bond coat and to the substrate more firmly than would otherwise be the case in the absence of the whiskers. Each whisker individually serves to anchor or "peg" the thermal barrier coating to the substrate. The myriad of anchoring points resist local thermal cycling failures of the thermal barrier coating system, prolonging the life of the thermal barrier coating system and the protected component.

In the preferred embodiment, the protected substrate is a nickel-based superalloy and the thermal barrier coating is a mixture of zirconia and about 8-20 percent yttria. The bond coat is preferably an alloy of about 15-25 weight percent chromium, about 3-12 weight percent aluminum, balance iron. This bond coat alloy can be made to produce in-situ grown aluminum oxide whiskers therein during a preoxidiz- ing/oxidizing treatment. Alloys of the MCrAIY type are also suitable for the bond coat.

The present invention provides an important advance in the art of thermal barrier coating systems. The whisker anchors in the bond coat aid in retention of the thermal barrier coating without failure, prolonging the lifetime of the protected components. Other features and advantages of the invention will be apparent from the following more detailed description of the preferred embodiments, taken in conjunction with the accompanying drawings, which illustrate, by way of example, the principles of the invention.

### BRIEF DESCRIPTION OF THE DRAWINGS

Figure 1 is a perspective view of a gas turbine component, in this case a gas turbine blade;
Figure 2 is an enlarged sectional view through the surface region of the component of Figure 1, taken generally along line 2-2; and
Figure 3 is a block diagram for a process for depositing a thermal barrier coating system according to the invention.

### DETAILED DESCRIPTION OF THE PREFERRED

### EMBODIMENTS

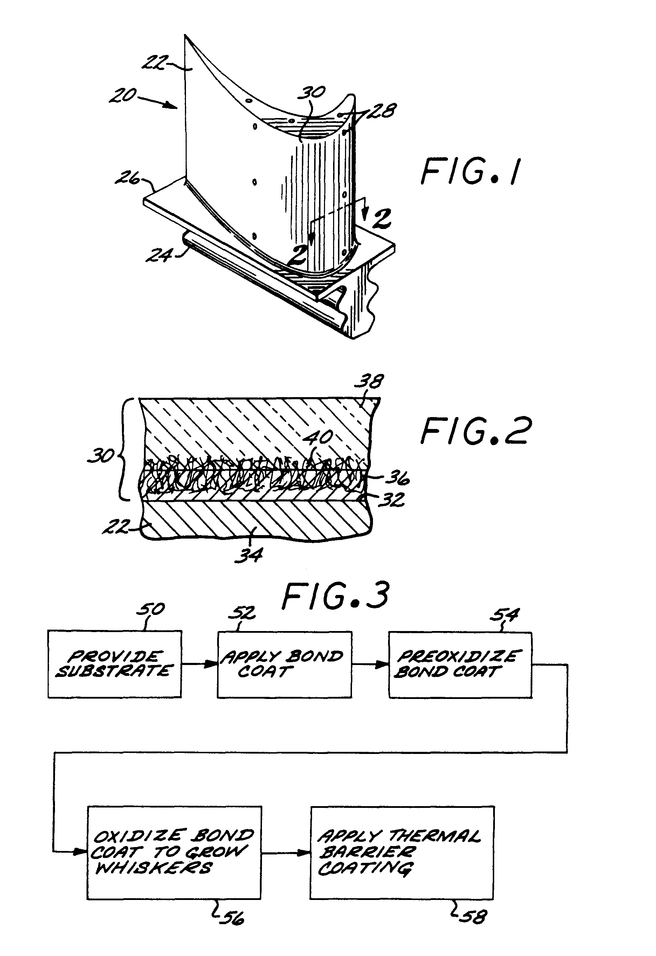

Figure 1 depicts an illustrative component of a gas turbine engine, a turbine blade 20 made of a nickel-based superalloy material. The turbine blade 20 includes an airfoil 22 against which the flow of hot exhaust gas is directed. The turbine blade 20 is mounted to a turbine disk (not shown) by a dovetail 24 which extends downwardly from the airfoil 22 and engages a slot on the turbine disk. A platform 26 extends longitudinally outwardly from the area where the airfoil 22 is joined to the dovetail 24. A number of cooling channels desirably extend through the interior of the airfoil 22, ending in openings 28 in the surface of the airfoil 22. A flow of cooling air is directed through the cooling channels, to reduce the temperature of the airfoil 22.

As shown in Figure 1 and in greater detail in Figure 2, a thermal barrier coating system 30 is applied to a surface 32 of a substrate 34, in this case the airfoil 22 of the turbine blade 20. In accordance with this aspect of the invention, a coated article comprises a nickel-based superalloy substrate 34 formed as a component of a gas turbine engine, here the gas turbine blade 20, and a thermal barrier coating system 30 over at least a portion of the surface 32 of the substrate 34. The thermal barrier coating system 30 protects the covered portion of the substrate from high gas temperatures, as well as oxidation, corrosion, and erosion.

The thermal barrier coating system 30 comprises a bond coat 36 on the substrate 34, and a a thermal barrier coating 38 on and overlying the bond coat 36. The bond coat 36 is preferably an alloy of about 15-25 weight percent chromium, about 3-12 weight percent aluminum, balance iron. The bond coat 36 preferably has a thickness of from about 0.001 to about 0.008 inches, most preferably about 0.004 inches. The thermal barrier coating 38 is preferably a ceramic comprising zirconium oxide plus from about 8 to about 20 weight percent yttrium oxide, most preferably about 8 weight percent yttrium oxide. The thermal barrier coating 38 is preferably from about 0.001 to about 0.025 inches thick, most preferably about 0.005 inches thick.

A plurality of whiskers 40 extend through at least a portion of the bond coat 36 between the substrate 34 and the thermal barrier coating 38. The mass of whiskers 40 preferably extends through the entire thickness of the bond coat 36 from the substrate 34 to the thermal barrier coating 38, as illustrated in Figure 1. However, it should not be inferred that any individual whisker must extend through the entire thickness of the bond coat 36. The whiskers 40 are preferably aluminum oxide whiskers formed in-situ within the coat 36 by a process to be described subsequently. As used herein, the term "whisker" is intended to mean any filamentary material, and is not intended to be limiting as to any particular material, structure, or crystal structure.

The thermal barrier coating system 30 is preferably produced and applied by a process illustrated in block diagram form in Figure 3. The nickel-based superalloy substrate is supplied in essentially the desired shape and size, numeral 50, except that it may be dimensioned undersize by an amount sufficient to permit the application of the thermal barrier coating. The bond coat 36 is applied, numeral 52, by any technique that may be appropriate. In the case of the preferred bond coat of iron, chromium, and aluminum, the bond coat 36 is applied by physical vapor deposition, air plasma spray, or any other appropriate technique.

The bond coat 36 is preoxidized, numeral 54, to produce a precursor oxide base for the in-situ growth of aluminum oxide whiskers 40. The preoxidation is accomplished by heating the substrate 34 and bond coat 36 to a temperature of from about 875° to about 925°C in an oxygen-containing environment of less than about 1.5 torr pressure, for a time of about 0.5-1.0 minutes. The substrate 34 and bond coat 36 are thereafter oxidized, numeral 56, to produce the aluminum oxide whiskers 40 by in-situ growth. The oxidation treatment 56 is accomplished in a circulating air atmosphere at one atmosphere pressure and a temperature of from about 870° to about 930°C, for a time of at least about 400 minutes. The resulting whiskers 40 extend through at least a portion of the bond coat 36 and out of the upper surface of the bond coat 36. The formation of such oxide whiskers is known in the art, see for example US patents 4,331,631 and 4,318,828, whose disclosures are incorporated by reference. However, the growth and use of such whiskers in thermal barrier coating systems is not known.

The thermal barrier coating 38 is applied overthe bond coat 36 and whiskers 40, numeral 58 of Figure 3. The thermal barrier coating, preferably yttria-stabilized zirconia as discussed previously, may be applied by any operable technique such as physical vapor deposition or air plasma spray.

The finished component, such as a turbine blade 20, may then be used in a manner identical to that of prior comparable components, except that the thermal barrier coating system includes whiskers to anchor the thermal barrier coating to the substrate.

The present invention provides an important advance in the art of coated superalloys. Although a particular embodiment of the invention has been described in detail for purposes of illustration, various modifications may be made without departing from the spirit and scope of the invention. Accordingly, the invention is not to be limited except as by the appended claims.

## Claims

1. A coated article, comprising:
a substrate;
a bond coat on the substrate;
a thermal barrier coating on the bond coat; and
a plurality of whiskers extending through at least a portion of the bond coat between the substrate and the thermal barrier coating.

2. The coated article of claim 1, wherein the substrate is formed as a component of a gas turbine engine.

3. The coated article of Claim 1 or Claim 2, wherein the substrate is made of a nickel-based superalloy.

4. The coated article of any preceding claim, wherein the bond coat is made of an iron-based alloy.

5. The coated article of any preceding claim, wherein the bond coat is made of an alloy of iron, chromium, and aluminum.

6. The coated article of any preceding claim, wherein the thermal barrier coating is made of a ceramic material.

7. The coated article of any preceding claim, wherein the thermal barrier coating comprises zirconium oxide.

8. The coated article of any preceding claim, wherein the thermal barrier coating comprises yttria stabilized zirconium oxide.

9. The coated article of any preceding claim, wherein the whiskers are aluminium oxide.

10. A coated article, comprising:
a nickel-based superalloy substrate formed as a component of a gas turbine engine;
a thermal barrier coating system on the surface of the substrate, the thermal barrier coating system comprising
a bond coat on the substrate,
a thermal barrier coating on the bond coat, and
a plurality of whiskers extending through at least a portion of the bond coat between the substrate and the thermal barrier coating.

11. A process for preparing a coated article, comprising the steps of:
providing a substrate;
depositing a bond coat on the substrate;
preoxidizing the bond coat
oxidizing the bond coat to form a plurality of whiskers in the bond coat; and
depositing a thermal barrier coating on the bond coat.

12. The process of claim 11, wherein the substrate is shaped as a component of a gas turbine engine.

13. The process of Claim 11 or Claim 12, wherein the substrate is made of a nickel-based superalloy.

14. The process of any one of Claims 11 to 13, wherein the bond coat is made of an iron-based alloy.

15. The process of any one of Claims 11 to 14, wherein the bond coat is made of an alloy of iron, chromium, and aluminum.

16. The process of any one of Claims 11 to 15, wherein the bond coat deposited in the step of depositing has a composition of from about 15 to about 25 weight percent chromium, from about 3 to about 12 weight percent aluminum, balance iron.

17. The process of any one of Claims 11 to 16, wherein the thermal barrier coating is made of a ceramic material.

18. The process of any one of Claims 11 to 17, wherein the thermal barrier coating comprises zirconium oxide.

19. The process of any one of Claims 11 to 18, wherein the thermal barrier coating comprises yttria stabilized zirconium oxide.

20. The process of any one of Claims 11 to 19, wherein the whiskers are aluminum oxide.
